# EUROPEAN PATENT SPECIFICATION

(11) **EP 4 203 598 B1**
(45) Date of publication and mention of the grant of the patent: **06.11.2024**
(21) Application number: 20954380.0
(22) Date of filing: 22.09.2020
(51) Int. Cl.: H04W 74/08, H04W 88/02, H04W 4/70, H04W 4/02

(54) **INFORMATION SENDING METHOD, APPARATUS AND SYSTEM**
INFORMATIONSSENDEVERFAHREN, -VORRICHTUNG UND -SYSTEM
PROCÉDÉ, APPAREIL ET SYSTÈME D'ENVOI D'INFORMATIONS

(43) Date of publication of application: 28.06.2023
(73) Proprietor: Huawei Technologies Co., Ltd., Shenzhen, Guangdong 518129 (CN)
(72) Inventor: SU, Yuwan, Shenzhen, Guangdong 518129 (CN); LUO, Zhihu, Shenzhen, Guangdong 518129 (CN); JIN, Zhe, Shenzhen, Guangdong 518129 (CN)
(74) Representative: Pfenning, Meinig & Partner mbB
(86) International application number: PCT/CN2020/116863
(87) International publication number: WO 2022/061526

(56) References cited:
- EP-A1- 3 641 408
- WO-A1-2019/061366
- WO-A1-2020/077599
- WO-A1-2020/142683
- CN-A- 107 333 283
- CN-A- 109 391 950
- CN-A- 109 729 600
- US-A1- 2020 213 829

## Description

### TECHNICAL FIELD

This application relates to the communication field, and in particular, to an information sending method, and a communication apparatus.

### BACKGROUND

An internet of things (internet of things, loT) is "an internet through which things are connected to each other". The loT extends a user end of the internet to any object, so that any object can perform information exchange and communication.

With development of IoT technologies, IoT applications have increasingly higher requirements on IoT designs. To meet these requirements, the 3rd Generation Partnership Project (3rd generation partnership project, 3GPP), a mobile communications standards organization, agreed on a new research topic at the plenary meeting #62 of the radio access network (radio access network, RAN), to study a method for supporting a low-cost internet of things with extremely low complexity in a cellular network, and initiated a topic of a narrowband internet of things (narrowband internet of thing, NB-IoT) at the meeting RAN#69.

In some NB-IoT scenarios, a network device may need to obtain a quantity of terminal devices within coverage of the network device. Therefore, it is necessary to design a proper solution, so that the network device can obtain the quantity of terminal devices.

WO 2020/142683 A1 discloses a random access procedure. In the procedure, a base station may transmit (e.g. , unicast, multicast, or broadcast), to a UE, a RACH configuration via one or more beams. The RACH configuration may comprise one or more parameters indicating at least one of following: available set of PRACH resources for a transmission of a random access preamble, initial preamble power (e.g. , random access preamble initial received target power), a maximum number of preamble transmission. A UE may transmit, to the base station, a selected random access preamble via a selected PRACH occasions.

EP 3641408 A1 discloses a system information transmission method. The method includes: receiving request information for requesting target Other System Information sent by a terminal; configuring a random access message 2 or a random access message 4 for the terminal based on the request information; and sending the random access message 2 or the random access message 4 to the terminal.

WO 2020/077599 A1 discloses an access method. In the method, a terminal device receives a first tracking area identifier sent by a network device, wherein the first tracking area identifier is not included in a tracking area list of the terminal device. The terminal device sends a random access request to the network device.

### SUMMARY

The invention is set out in the appended set of claims. This application provides an information sending method, an apparatus, and a system, to obtain a quantity of terminal devices.

To achieve the foregoing objective, the following technical solutions are used in this application.

According to a first aspect, an information sending method is provided. In this solution, a network device sends first information by using a first message, where the first information is used to indicate a terminal device to send second information on one or more first resources, and the first message is a first broadcast message or a paging message. Then, the network device receives the second information on the one or more first resources.

In this solution, the first message is the broadcast message or the paging message, and a plurality of terminal devices located within coverage of the network device may receive the first message. Each terminal device that receives the first message may send the second information on a part of or all of the one or more first resources based on the first information included in the first message, so that the network device receives the second information on the one or more first resources. After receiving the second information, the network device determines a quantity of terminal devices within the coverage of the network device based on the second information. For example, the network device may estimate the quantity of terminal devices within the coverage of the network device based on a quantity of pieces of received second information, or a quantity of times of receiving the second information.

In some possible designs, the information sending method further includes: The network device sends a second broadcast message, where the second broadcast message includes first indication information, the first indication information is used to indicate a state of the network device, and the state of the network device includes a first state, a second state, or a third state. In the first state, the network device allows access of the terminal device, and a period in which the network device sends a common signal is a first period. In the second state, the network device allows access of the terminal device, and a period in which the network device sends a common signal is a second period, and the second period is longer than the first period. In the third state, the network device prohibits access of the terminal device.

Based on the possible design, the second state in which the network device allows access of the terminal device and the sending period of the common signal is long is provided. In this state, because the sending period in which the network device sends the common signal is long, and a frequency of sending the common signal is low, resource overheads and power consumption of the network device can be reduced.

In some possible designs, the state of the network device is determined based on the quantity of terminal devices within the coverage of the network device, and the quantity of terminal devices is determined based on the second information.

In some possible designs, when the quantity of terminal devices is greater than or equal to a first threshold, the state of the network device is the first state or the third state; or when the quantity of terminal devices is less than a first threshold, the state of the network device is the second state or the third state.

Based on the possible design, if the quantity of terminal devices is greater than the first threshold, the state of the network device is determined as the first state. To be specific, when the quantity of terminal devices is large, the network device may send the common signal in the first period, to meet communication requirements of the large quantity of terminal devices. If the quantity of terminal devices is less than the first threshold, the state of the network device is determined as the second state. To be specific, when the quantity of terminal devices is small, the network device may send the common signal in the longer second period, to reduce power consumption of the network device.

In some possible designs, the information sending method further includes: The network device sends a third broadcast message, where the third broadcast message includes second indication information, and the second indication information is used to indicate a maximum quantity of times that one terminal device sends the second information on the one or more first resources.

Based on the possible design, the terminal device can be prevented from frequently sending the second information on the plurality of first resources, and an error of the quantity of terminal devices estimated by the network device based on the second information can be reduced.

In some possible designs, the first information includes resource configuration information, and the resource configuration information is used to configure the one or more first resources; and the resource configuration information includes a time domain offset and/or a frequency domain offset, the time domain offset is an offset of a time domain position of the first resource relative to a time domain position of the first message, and the frequency domain offset is an offset of a frequency domain position of the first resource relative to a frequency domain position of the first message.

In some possible designs, the second information is a preamble sequence in a random access procedure.

In some possible designs, the network device does not send response information of the second information. Based on this solution, signaling overheads and power consumption of the network device can be reduced.

In some possible designs, the first broadcast message further includes third indication information, and the third indication information is used to indicate a transmit power of the second information or a power level corresponding to the transmit power of the second information.

According to a second aspect, an information sending method is provided. In the method, a terminal device receives first information from a network device by using a first message, where the first information is used to indicate the terminal device to send second information on one or more first resources, and the first message is a first broadcast message or a paging message; and the terminal device sends the second information on a part of or all of the one or more first resources. For the technical effects brought by the second aspect, refer to the technical effects brought by the first aspect. Details are not described herein again.

In some possible designs, the information sending method further includes: The terminal device receives a second broadcast message from the network device, where the second broadcast message includes first indication information, and the first indication information is used to indicate a state of the network device; and the terminal device determines the state of the network device based on the first indication information. The state of the network device includes a first state, a second state, or a third state. In the first state, the network device allows access of the terminal device, and a period in which the network device sends a common signal is a first period. In the second state, the network device allows access of the terminal device, and a period in which the network device sends a common signal is a second period. In the third state, the network device prohibits access of the terminal device.

In some possible designs, the state of the network device is determined based on a quantity of terminal devices within coverage of the network device, and the quantity of terminal devices is determined based on the second information.

In some possible designs, when the quantity of terminal devices is greater than or equal to a first threshold, the state of the network device is the first state or the third state; or when the quantity of terminal devices is less than a first threshold, the state of the network device is the second state or the third state.

In some possible designs, the information sending method further includes: The terminal device receives a third broadcast message from the network device, where the third broadcast message includes second indication information, and the second indication information is used to indicate a maximum quantity of times that one terminal device sends the second information on the one or more first resources; and that the terminal device sends the second information on a part of or all of the one or more first resources includes: the terminal device sends the second information on the part of or all of the one or more first resources based on the maximum quantity of times.

In some possible designs, the first information includes resource configuration information, and the resource configuration information is used to configure one or more first resources; and the resource configuration information includes a time domain offset and/or a frequency domain offset, the time domain offset is an offset of a time domain position of the first resource relative to a time domain position of the first message, and the frequency domain offset is an offset of a frequency domain position of the first resource relative to a frequency domain position of the first message. The terminal device determines the one or more first resources based on the first information.

In some possible designs, the second information is a preamble sequence in a random access procedure.

In some possible designs, after that the terminal device sends the second information, the information sending method further includes: The terminal device skips monitoring response information of the second information, or the terminal device enters an idle state.

In some possible designs, the first broadcast message further includes third indication information, and the third indication information is used to indicate a transmit power of the second information or a power level corresponding to the transmit power of the second information.

For technical effects brought by any possible design of the second aspect, refer to the technical effects brought by the corresponding design of the first aspect. Details are not described herein again.

According to a third aspect, a communication apparatus is provided. The apparatus includes at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the network device in the first aspect, an apparatus including the network device, or an apparatus included in the network device, for example, a chip; or the communication apparatus may be the terminal device in the second aspect, an apparatus including the terminal device, or an apparatus included in the terminal device, for example, a chip.

It may be understood that when the communication apparatus provided in the third aspect is a chip, the sending action/function may be understood as outputting data or information, and the receiving action/function may be understood as inputting data or information.

For the technical effects brought by the design of the third aspectt, refer to the technical effects brought by different designs of the first aspect or the second aspect. Details are not described herein again.

### BRIEF DESCRIPTION OF DRAWINGS

FIG. 1 is a schematic diagram of a structure of a paging cycle according to an embodiment of this application;
FIG. 2 is a schematic diagram of a structure of a communication system according to an embodiment of this application;
FIG. 3 is a schematic diagram of a structure of a terminal device and a network device according to an embodiment of this application;
FIG. 4 is a schematic diagram of a structure of another terminal device according to an embodiment of this application;
FIG. 5 is a schematic diagram of a structure of a test period according to an embodiment of this application;
FIG. 6 is a schematic flowchart of an information sending method according to an embodiment of this application;
FIG. 7a is a schematic diagram of a plurality of first resources according to an embodiment of this application;
FIG. 7b is another schematic diagram of a plurality of first resources according to an embodiment of this application;
FIG. 8 is a schematic flowchart of another information sending method according to an embodiment of this application;
FIG. 9 is a schematic diagram of a structure of another network device according to an embodiment of this application; and
FIG. 10 is a schematic diagram of a structure of still another terminal device according to an embodiment of this application.

### DESCRIPTION OF EMBODIMENTS

For ease of understanding solutions in embodiments of this application, brief descriptions or definitions of related technologies are first provided as follows:

### 1. Paging message:

The paging message is mainly used to indicate a terminal device in a radio resource control (radio resource control, RRC) idle state (RRC _IDLE) to perform random access, so that the terminal device enters an RRC connected state (RRC _CONNECTED), to subsequently perform data communication. Certainly, the paging message may also have another function, for example, notifying a terminal device in an RRC idle state, an RRC inactive state (RRC _INACTIVE), or an RRC connected state that a system message changes. For details, refer to definitions in an existing standard. Details are not described herein again.

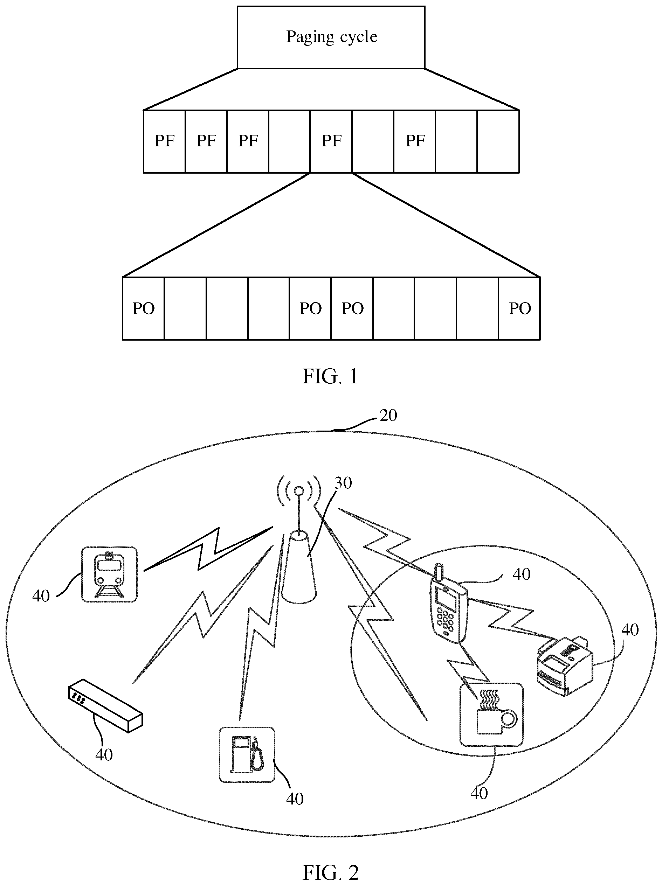

For the paging message, a network device may send scheduling information of the paging message by using downlink control information (downlink control information, DCI), so that the terminal device may receive the paging message based on the DCI. The network device may periodically send the DCI, and the period is a paging cycle. For example, as shown in FIG. 1, in one paging cycle, a plurality of paging frames (paging frames, PFs) may be included, and each paging frame includes a plurality of paging occasions (paging occasions, POs). The DCI including the scheduling information of the paging message is sent on the PO.

In discontinuous reception (discontinuous reception, DRX), the terminal device detects only one PO in each DRX cycle. In other words, for each terminal device, only one PO may be used to send the DCI in each paging cycle. Certainly, different terminal devices may correspond to a same PO. That is, paging messages of different terminal devices corresponding to a same PO are the same. Concepts of the DRX cycle and the paging cycle are the same.

### 2. Broadcast message:

The broadcast message in this application is a message at a network device (or cell) level, and is valid for any terminal device in the network device (or cell). The broadcast message may include a master information block (master information block, MIB), a system information block (system information block, SIB) 1 (namely, an SIB 1), or a system information (system information, SI) message.

The MIB mainly includes a downlink system bandwidth, a physical hybrid automatic repeat request (hybrid automatic repeat request, HARQ) indicator channel (physical HARQ indicator channel, PHICH) configuration, a system frame number, a hyper frame number, an NB-IoT deployment mode, scheduling information of an SIB 1, and the like. The SIB 1 mainly includes information related to cell selection and camping, for example, a public land mobile network (public land mobile network, PLMN) identifier, cell selection information, a cell offset, and used frequency band information. In addition, the SIB 1 is further used to indicate an SI message in a system, a period of each SI message, and a SIB included in each SI message. The SI message includes one or more SIBs other than the SIB 1, for example, one or more SIBs in a SIB 2 to a SIB 12.

Certainly, the broadcast message may alternatively be another message at the network device (or cell) level. A type of the broadcast message is not specifically limited in this application.

Currently, in an NR system, downlink synchronization may be implemented by using a synchronization broadcast block (synchronization signal block, SSB) broadcast by the network device. In a narrowband internet of things (narrowband internet of things, NB-IoT) system, downlink synchronization may be implemented by using a narrowband primary synchronization signal (narrowband primary synchronization signal, NPSS), a narrowband secondary synchronization signal (narrowband secondary synchronization signal, NNSS), or a narrowband physical broadcast channel (narrowband physical broadcast channel, NPBCH) broadcast by the network device.

Regardless of the SSB in NR or the NPSS, the NSSS, and the NPBCH in NB-IoT, sending periods thereof are short, and are applicable to a scenario in which a quantity of terminals is large after network construction is mature. However, in an early stage of network construction, especially for NB-IoT, the quantity of terminals is small, and consequently sending the foregoing signal according to a period specified in an existing standard may cause high power consumption of the network device.

Therefore, in this scenario, the network device may need to obtain a quantity of terminal devices. Based on this, this application provides a method, so that the network device may obtain the quantity of terminal devices.

The following describes the technical solutions in embodiments of this application with reference to the accompanying drawings in embodiments of this application. In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural. In addition, unless otherwise specified, "a plurality of" in the descriptions of this application means two or more than two. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of "example" or "for example" is intended to present a relative concept in a specific manner for ease of understanding.

Embodiments of this application are applicable to a long term evolution (long term evolution, LTE) system; or are applicable to an enhanced machine type communication (enhanced machine type communication, eMTC) system or an NB-IoT system of the internet of things (internet of things, IoT); or are applicable to another wireless communication system, for example, a universal mobile telecommunications system (universal mobile telecommunications system, UMTS), a code division multiple access (code division multiple access, CDMA) system, a wideband code division multiple access (wideband code division multiple access, WCDMA), NR, and a new future-oriented network system. This is not specifically limited in embodiments of this application. The communication system applicable to this application is merely an example for description, and the communication system applicable to this application is not limited thereto. This is uniformly described herein, and details are not described below again. In addition, the terms "system" and "network" may be interchangeable.

FIG. 2 is a communication system 20 according to an embodiment of this application. The communication system 20 includes at least one network device 30 and one or more terminal devices 40 connected to the network device 30. Optionally, different terminal devices 40 may communicate with each other.

An example in which the network device 30 shown in FIG. 2 interacts with any terminal device 40 is used. In this embodiment of this application, the network device sends first information by using a first message, where the first information is used to indicate the terminal device to send second information on one or more first resources, and the first message is a broadcast message or a paging message. After receiving the first information by using the first message, the terminal device sends the second information on a part of or all of the one or more first resources, so that the network device may receive the second information on the one or more first resources.

In this solution, the first message is the broadcast message or the paging message, and a plurality of terminal devices located within coverage of the network device may receive the first message. Each terminal device that receives the first message may send the second information on the part of or all of the one or more first resources based on the first information included in the first message, so that the network device receives the second information on the one or more first resources. After receiving the second information, the network device may estimate a quantity of terminal devices within the coverage of the network device based on a quantity of pieces of received second information, or a quantity of times of receiving the second information, to perform subsequent processing based on the quantity of terminal devices.

Optionally, the network device 30 in this embodiment of this application is a device for connecting the terminal device 40 to a wireless network, and may be an evolved NodeB (evolved NodeB, eNB or eNodeB) in LTE; or may be a base station in a 5th generation (5th generation, 5G) network or a future evolved public land mobile network (public land mobile network, PLMN), a broadband network gateway (broadband network gateway, BNG), an aggregation switch, or a non-3rd Generation Partnership Project (3rd generation partnership project, 3GPP) access device. Alternatively, the network device 30 in this embodiment of this application may be a radio controller in a cloud radio access network (cloud radio access network, CRAN), a transmission reception point (transmission reception point, TRP), a device including a TRP, or the like. This is not specifically limited in this embodiment of this application. Optionally, the base station in embodiments of this application may include base stations in various forms, for example, a macro base station, a micro base station (which is also referred to as a small cell), a relay station, and an access point. This is not specifically limited in embodiments of this application.

Optionally, the terminal device 40 in embodiments of this application may be a device, such as a terminal or a chip that can be used in the terminal, configured to implement a wireless communication function. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in an IoT, a 5G network, or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed.

Optionally, the network device 30 and the terminal device 40 in this embodiment of this application may also be referred to as communication apparatuses, and each may be a general-purpose device or a dedicated device. This is not specifically limited in this embodiment of this application.

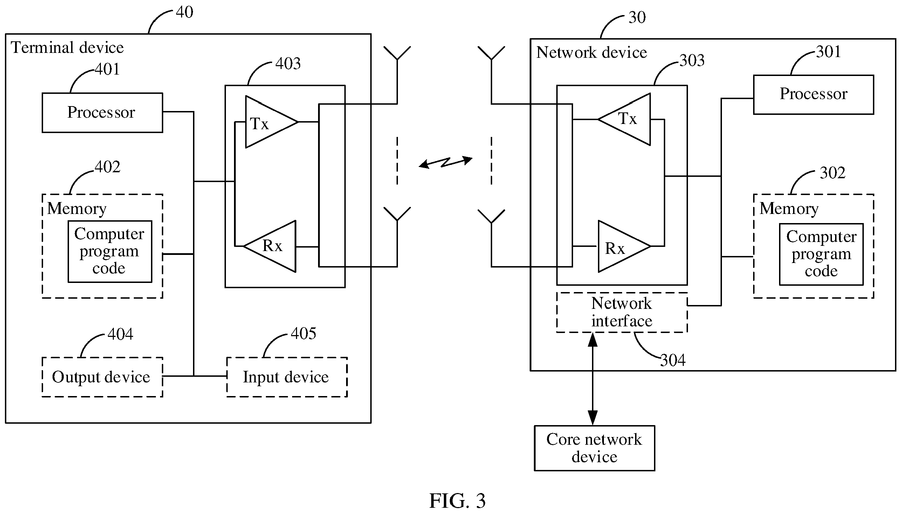

Optionally, FIG. 3 is a schematic diagram of structures of the network device 30 and the terminal device 40 according to this embodiment of this application.

The terminal device 40 includes at least one processor (an example in which one processor 401 is included is used for description in FIG. 3) and at least one transceiver (an example in which one transceiver 403 is included is used for description in FIG. 3). Optionally, the terminal device 40 may further include at least one memory (an example in which one memory 402 is included is used for description in FIG. 3), at least one output device (an example in which one output device 404 is included is used for description in FIG. 3), and at least one input device (an example in which one input device 405 is included is used for description in FIG. 3).

The processor 401, the memory 402, and the transceiver 403 are connected to each other through a communication line. The communication line may include a path for transmitting information between the foregoing components.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application. During specific implementation, in an embodiment, the processor 401 may alternatively include a plurality of CPUs, and the processor 401 may be a single-core (single-CPU) processor or a multi-core (multi-CPU) processor. The processor herein may be one or more devices, circuits, or processing cores configured to process data (for example, computer program instructions).

The memory 402 may be an apparatus having a storage function. The memory may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, this is not limited thereto. The memory 402 may exist independently, and is connected to the processor 401 through the communication line. The memory 402 may alternatively be integrated with the processor 401.

The memory 402 is configured to store computer-executable instructions for performing the solutions in this application, and the processor 401 controls execution of the computer-executable instructions. Specifically, the processor 401 is configured to execute the computer-executable instructions stored in the memory 402, to implement the information sending method according to embodiments of this application.

Alternatively, optionally, in this embodiment of this application, the processor 401 may perform processing-related functions in the information sending method provided in the following embodiments of this application. The transceiver 403 is responsible for communicating with another device or a communication network. This is not specifically limited in this embodiment of this application.

Optionally, the computer-executable instructions in this embodiment of this application may also be referred to as application program code or computer program code. This is not specifically limited in this embodiment of this application.

The transceiver 403 may use any apparatus such as a transceiver, and is configured to communicate with another device or a communication network, for example, an Ethernet, a radio access network (radio access network, RAN), or a wireless local area network (wireless local area network, WLAN). The transceiver 403 includes a transmitter (transmitter, Tx) and a receiver (receiver, Rx).

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, a projector (projector), or the like.

The input device 405 communicates with the processor 401, and may receive a user input in a plurality of manners. For example, the input device 405 may be a mouse, a keyboard, a touchscreen device, a sensor device, or the like.

The network device 30 includes at least one processor (an example in which one processor 301 is included is used for description in FIG. 3) and at least one transceiver (an example in which one transceiver 303 is included is used for description in FIG. 3). Optionally, the network device 30 may further include at least one memory (an example in which one memory 302 is included is used for description in FIG. 3) and at least one network interface (an example in which one network interface 304 is included is used for description in FIG. 3). The processor 301, the memory 302, the transceiver 303, and the network interface 304 are connected through a communication line. The network interface 304 is configured to connect to a core network device through a link (for example, an S1 interface), or connect to a network interface of another network device through a wired or wireless link (for example, an X2 interface) (not shown in FIG. 3). This is not specifically limited in this embodiment of this application. In addition, for descriptions about the processor 301, the memory 302, and the transceiver 303, refer to descriptions about the processor 401, the memory 402, and the transceiver 403 in the terminal device 40. Details are not described again herein.

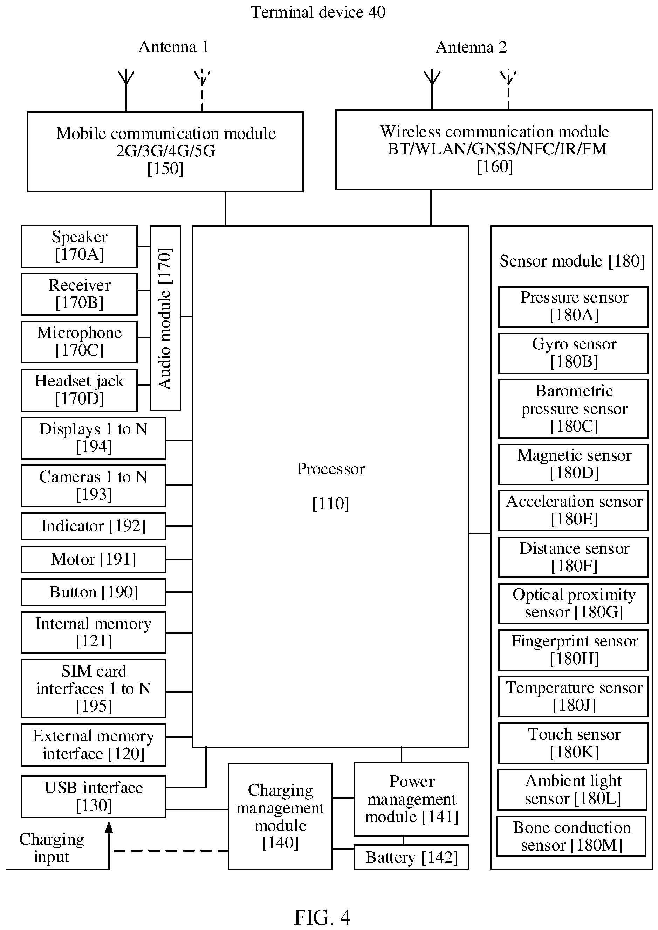

With reference to the schematic diagram of the structure of the terminal device 40 shown in FIG. 3, for example, FIG. 4 is a specific form of a structure of the terminal device 40 according to an embodiment of this application.

In some embodiments, a function of the processor 401 in FIG. 3 may be implemented by a processor 110 in FIG. 4.

In some embodiments, a function of the transceiver 403 in FIG. 3 may be implemented by using an antenna 1, an antenna 2, a mobile communication module 150, a wireless communication module 160, or the like in FIG. 4.

The antenna 1 and the antenna 2 are configured to transmit and receive electromagnetic wave signals. Each antenna in the terminal device 40 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution used for wireless communication including 2G, 3G, 4G, 5G, and the like on the terminal device 40. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The wireless communication module 160 may provide a solution that is applied to the terminal device 40 and that is for wireless communication such as a wireless local area network (wireless local area network, WLAN) (for example, a Wi-Fi network), Bluetooth (blue tooth, BT), a global navigation satellite system (global navigation satellite system, GNSS), frequency modulation (frequency modulation, FM), near field communication (near field communication, NFC), or an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal device 40 is coupled to the mobile communication module 150, and the antenna 2 is coupled to the wireless communication module 160, so that the terminal device 40 can communicate with a network and another device by using a wireless communication technology. The wireless communication technology may include LTE, BT, a GNSS, a WLAN, NFC, FM, an IR technology, or the like. The GNSS may include a global positioning system (global positioning system, GPS), a global navigation satellite system (global navigation satellite system, GLONASS), a BeiDou navigation satellite system (beidou navigation satellite systems, BDS), a quasi-zenith satellite system (quasi-zenith satellite system, QZSS), or a satellite based augmentation system (satellite based augmentation system, SBAS).

In some embodiments, a function of the memory 402 in FIG. 3 may be implemented by using an internal memory 121, an external memory (for example, a Micro SD card) connected to an external memory interface 120 in FIG. 4, or the like.

In some embodiments, a function of the output device 404 in FIG. 3 may be implemented through a display 194 in FIG. 4. The display 194 is configured to display an image, a video, and the like. The display 194 includes a display panel.

In some embodiments, a function of the input device 405 in FIG. 3 may be implemented through a mouse, a keyboard, a touchscreen device, or a sensor module 180 in FIG. 4. For example, as shown in FIG. 4, the sensor module 180 may include, for example, one or more of a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M. This is not specifically limited in this embodiment of this application.

In some embodiments, as shown in FIG. 4, the terminal device 40 may further include one or more of an audio module 170, a camera 193, an indicator 192, a motor 191, a button 190, a SIM card interface 195, a USB interface 130, a charging management module 140, a power management module 141, and a battery 142. The audio module 170 may be connected to a speaker 170A (which is also referred to as a "horn"), a receiver 170B (which is also referred to as an "earpiece"), a microphone 170C (which is also referred to as a "mike" or a "microphone"), a headset jack 170D, or the like. This is not specifically limited in this embodiment of this application.

It may be understood that the structure shown in FIG. 4 does not constitute a specific limitation on the terminal device 40. For example, in some other embodiments of this application, the terminal device 40 may include more or fewer components than those shown in the figure, or some components may be combined, some components may be split, or the components may be differently arranged. The components shown in the figure may be implemented by hardware, software, or a combination of software and hardware.

With reference to FIG. 1 to FIG. 4, the following describes in detail the information sending method provided in embodiments of this application by using an example, shown in FIG. 2, in which the network device 30 interacts with any terminal device 40.

It may be understood that, in embodiments of this application, the terminal device and/or the network device may perform a part of or all of steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application need to be performed.

It should be noted that, in the following embodiments of this application, names of messages between devices or functions, names of parameters in messages, or the like are merely examples, and there may be other names during specific implementation. This is not specifically limited in embodiments of this application.

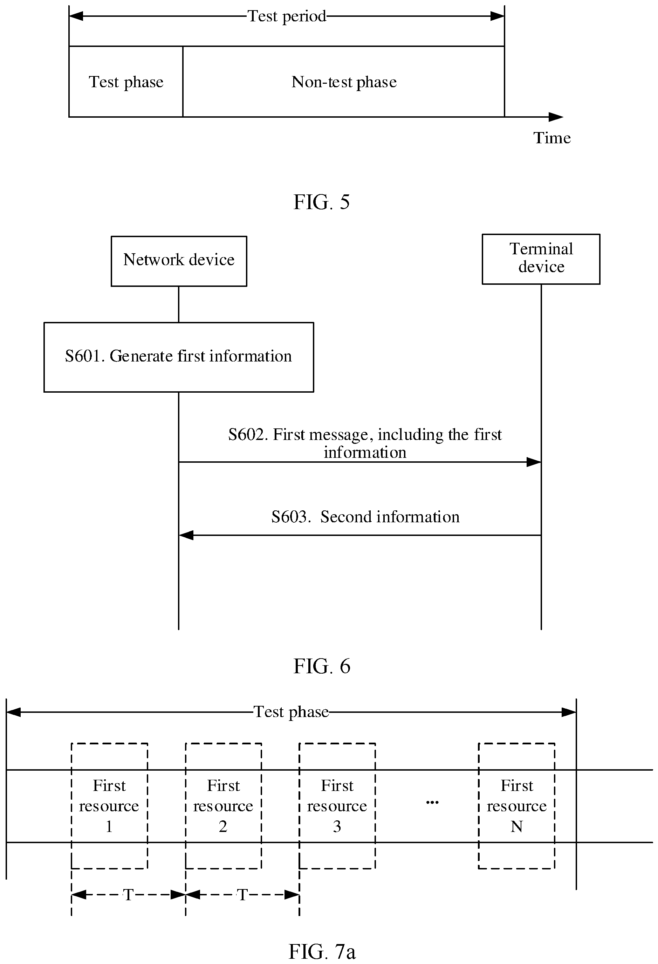

In this application, a test period may be defined in terms of time, and each test period includes a test phase and a non-test phase. After the network device is deployed, the network device enters a test phase of the first test period. The test phase may be used by the network device to estimate the quantity of terminal devices, that is, the method provided in this application may be performed in the test phase. For example, FIG. 5 is a schematic diagram of a test period. Detailed descriptions of the test phase and the non-test phase are described in subsequent embodiments. Details are not described herein. Alternatively, a test phase may be defined in terms of time, that is, a test phase exists, and a test period and a non-test phase do not exist. After the network device is deployed, the network device enters the test phase. The test phase may be used by the network device to estimate the quantity of terminal devices, that is, the method provided in this application may be performed in the test phase.

It should be noted that division of the test period, the test phase, and the non-test phase is merely an example for description of an application scenario of the solutions of this application, and does not constitute any limitation on the solutions of this application. When the foregoing division does not exist, the solutions in this application may still be performed. An application scenario of the following solutions is not specifically limited in this application.

FIG. 6 shows an information sending method according to this application. The information sending method includes the following steps.

S601. A network device determines first information.

The first information is used to indicate a terminal device to send second information on one or more first resources.

Optionally, when a test phase shown in FIG. 5 exists, the one or more first resources may be located in the test phase in time domain.

S602. The network device sends a first message. Correspondingly, the terminal device receives the first message from the network device. The first message includes the first information.

The first message is a first broadcast message, a paging message, or DCI used to schedule a paging message.

Optionally, the first broadcast message may be any one of a MIB, a SIB 1, or an SI message. When the first broadcast message is the SI message, the first information may be located in a SIB included in the SI message. Certainly, the SIB included in the SI message is not specifically limited in this application.

It may be understood that because the first message is the first broadcast message or the paging message, a plurality of terminal devices within coverage of the network device may receive the first message. Processing performed after each terminal device receives the first message is similar. In this application, one of the plurality of terminal devices that receive the first message is used as an example for description.

Optionally, the one or more first resources may appear periodically in time domain. In other words, an interval between start positions of any two adjacent first resources is the same.

Optionally, the one or more first resources may be configured by the network device, or may be predefined in a protocol. This is not specifically limited in this application.

In a possible implementation, the one or more first resources are configured by the network device. In this case, the first information includes resource configuration information, and the resource configuration information is used to configure the one or more first resources.

In this manner, the following cases are described.

In one case, when the first message is the first broadcast message or the paging message, the resource configuration information may include duration of the first resource, a period T of the first resource, a start time domain position of the first resource in the period T of the first resource, a start time domain position of the 1^{st} first resource, a frequency domain position of the first resource, and the like.

In another case, when the first message is the first broadcast message, the paging message, or the DCI used to schedule the paging message, the resource configuration information may include a time domain offset and/or a frequency domain offset, the time domain offset is an offset of a time domain position of the first resource relative to a time domain position of the first message, and the frequency domain offset is an offset of a frequency domain position of the first resource relative to a frequency domain position of the first message.

Optionally, when the first message is the first broadcast message, and the first broadcast message is the MIB, the SIB 1, or the SI message, the first broadcast message is also a periodically sent message. Therefore, when the resource configuration information includes the time domain offset, one or more periodic first resources may be configured for the periodically sent first broadcast message. In this case, the period T of the first resource may be equal to a period of the first broadcast message, or may be equal to an integer multiple of the period of the first broadcast message. For example, the test phase shown in FIG. 5 is used as an example. The one or more first resources may be shown in FIG. 7a.

Optionally, when the first message is the paging message, the one or more first resources may be aperiodic. In addition, each terminal device corresponds to only one PO in each paging cycle, different terminal devices may correspond to a same PO, and the different terminal devices corresponding to the same PO receive a same paging message. Therefore, first resources determined by the different terminal devices corresponding to the same PO based on time domain positions and/or frequency domain positions of the paging message are also the same. In this way, a plurality of terminal devices may be naturally grouped based on POs corresponding to the terminal devices by configuring the first resources by using the paging message. This reduces a possibility that a collision occurs when different terminal devices send the second information on the same first resource.

Optionally, when the first message is the DCI used to schedule the paging message, the one or more first resources may be aperiodic. In addition, each terminal device corresponds to only one PO in each paging cycle, different terminal devices may correspond to a same PO, and the different terminal devices corresponding to the same PO receive same DCI on the PO. Therefore, first resources determined by the different terminal devices corresponding to the same PO based on time domain positions and/or frequency domain positions of the DCI are also the same. In this way, a plurality of terminal devices may be naturally grouped based on POs corresponding to the terminal devices by configuring the first resources by using the DCI used to schedule the paging message. This reduces a possibility that a collision occurs when different terminal devices send the second information on the same first resource.

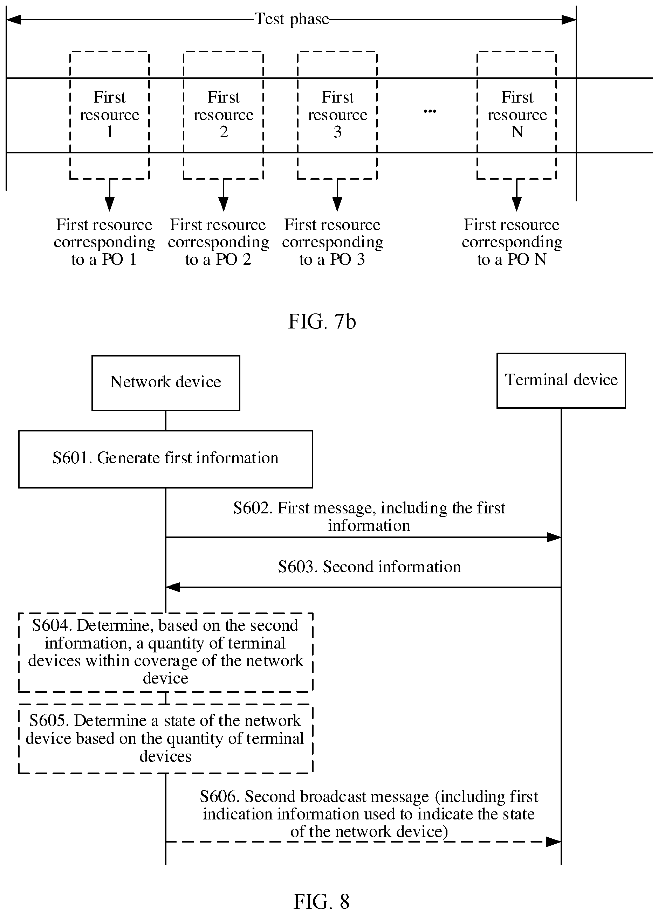

For example, the test phase shown in FIG. 5 is used as an example. The one or more first resources may be shown in FIG. 7b. A first resource 1 may be a first resource (a first resource corresponding to a PO 1) configured in the paging message scheduled by using the DCI transmitted on the PO 1, a first resource 2 may be a first resource (a first resource corresponding to a PO 2) configured in the paging message scheduled by using the DCI transmitted on the PO 2, and so on.

Optionally, after receiving the first message, the terminal device may determine the one or more first resources based on the resource configuration information in the first information.

Optionally, in this implementation, the first message may further include 1-bit (bit) information. When the 1-bit information is "1", the 1-bit information is used to enable (enable) or activate the terminal device to send the second information on the one or more first resources; or when the 1-bit information is "0", the 1-bit information is used to disable (disable) or deactivate the terminal device to send the second information on the one or more first resources. Alternatively, when the 1-bit information is "0", the 1-bit information is used to enable (enable) or activate the terminal device to send the second information on the one or more first resources; or when the 1-bit information is " 1", the 1-bit information is used to disable (disable) or deactivate the terminal device to send the second information on the one or more first resources.

In another possible implementation, the one or more first resources may be predefined in the protocol. For example, duration of the first resource, a period T of the first resource, and the like may be predefined in the protocol. In this case, the first information may include 1-bit (bit) information, to indicate the terminal device to send the second information on the one or more predefined first resources.

When the 1-bit information is " 1", the 1-bit information is used to enable (enable) or activate the terminal device to send the second information on the one or more predefined first resources; or when the 1-bit information is "0", the 1-bit information is used to disable (disable) or deactivate the terminal device to send the second information on the one or more predefined first resources. Alternatively, when the 1-bit information is "0", the 1-bit information is used to enable (enable) or activate the terminal device to send the second information on the one or more predefined first resources; or when the 1-bit information is "1", the 1-bit information is used to disable (disable) or deactivate the terminal device to send the second information on the one or more predefined first resources.

Optionally, the first broadcast message may further include third indication information to indicate one or more of the following: a type of the second information, a transmit power of the second information, or a power level corresponding to the transmit power of the second information.

It should be noted that first indication information and second indication information are further defined in this application, and are described in subsequent embodiments. Details are not described herein again.

Optionally, the type of the second information may include: a preamble sequence (preamble) in a random access procedure, a wake-up signal (wake-up signal, WUS), a newly defined dedicated signal, a data packet scrambled by a specific radio network temporary identifier (radio network temporary identifier, RNTI), and the like. The newly defined dedicated signal is a dedicated signal for estimating a quantity of terminal devices, for example, a dedicated ZC sequence, a dedicated Gold sequence, or a dedicated signal including another sequence.

Optionally, when the second information is the preamble sequence, the period of the first resource may be an integer multiple of a random access channel (random access channel, RACH) period; or when the second information is the WUS, the period of the first resource may be an integer multiple of a WUS period.

Optionally, the third indication information may indicate a transmit power of the second information on at least one first resource or a power level corresponding to the transmit power, and transmit powers of the second information on different first resources or power levels corresponding to the transmit powers may be different.

Optionally, the network device may not indicate the type of the second information, the transmit power of the second information, or the power level corresponding to the transmit power of the second information, and the terminal device independently makes a decision.

S603. The terminal device sends the second information to the network device. Correspondingly, the network device receives the second information.

After receiving the first information, the terminal device may determine the second information. Then, the terminal device sends the second information on a part of or all of the one or more first resources. In other words, the terminal device does not need to send the second information on each first resource, but sends the second information at least once on the one or more first resources. Correspondingly, the network device receives the second information on the one or more first resources.

It may be understood that after camping on a cell of the network device through cell selection or cell reselection, the terminal device sends the second information on the 1^{st} first resource after the first message when any one of the following cases occurs:
Case 1: The one or more first resources are configured by the network device by using the resource configuration information. After receiving the first message, the terminal device obtains the resource configuration information of the one or more first resources.
Case 2: The one or more first resources are configured by the network device by using the resource configuration information, and the first message further includes the 1-bit information. After receiving the first information, the terminal device obtains the configuration information of the one or more first resources, and determines that the 1-bit information is used to enable or activate the terminal device to send the second information on the one or more first resources.
Case 3: The one or more first resources are predefined in the protocol, and the terminal device receives the first message to acknowledge the 1-bit information, to enable or activate the terminal device to send the second information on the one or more predefined first resources.

It may be understood that the network device may receive the second information from the plurality of terminal devices on the one or more first resources.

For example, when the one or more first resources are shown in FIG. 7a, the terminal device may send the second information on a part of or all of first resources 1 to N. When the one or more first resources are shown in FIG. 7b, the terminal device sends the second information on the first resource corresponding to the PO corresponding to the terminal device. For example, if a PO corresponding to a terminal device 1 is a PO 1, the terminal device 1 sends the second information on the first resource 1 corresponding to the PO 1.

Optionally, when the first broadcast message includes the third indication information, the terminal device may send the second information according to an indication of the third indication information, for example, send second information whose type is the same as the type indicated by the third information, or send second information at the transmit power indicated by the third indication information or at the power level corresponding to the transmit power.

It may be understood that, when the second information is a sequence (for example, the preamble sequence or the WUS), after the terminal device sends the second information on the part of or all of the one or more first resources, the network device performs sequence detection on the one or more first resources to acquire (or obtain) the second information. In other words, in this case, that the network device receives the second information on the one or more first resources may also be referred to as detecting the second information on the one or more first resources.

In this solution, the first message is the broadcast message, the paging message, or the DCI used to schedule the paging message. A plurality of terminal devices located within coverage of the network device may receive the first message. Each terminal device that receives the first message may send the second information on the part of or all of the one or more first resources based on the first information included in the first message, so that the network device receives the second information on the one or more first resources. After receiving the second information, the network device may estimate the quantity of terminal devices within the coverage of the network device based on a quantity of pieces of received second information, or a quantity of times of receiving the second information, to perform subsequent processing based on the quantity of terminal devices.

As shown in FIG. 8, the method provided in this application further includes the following step S604.

S604. The network device determines, based on the second information, the quantity of terminal devices within the coverage of the network device.

In other words, the second information is used to determine the quantity of terminal devices within the coverage of the network device. For example, the network device may determine the quantity of pieces of received second information on the one or more first resources as the quantity of terminal devices within the coverage of the network device.

It should be noted that in this application, a related feature of the network device may be understood as a related feature of a cell that belongs to the network device. For example, the quantity of terminal devices within the coverage of the network device may be a quantity of terminal devices within coverage of the cell that belongs to the network device.

Optionally, when the test period shown in FIG. 5 exists, the quantity of terminal devices may be considered as a quantity that is of terminal devices within the coverage of the network device in the test phase and that is determined by the network device.

Optionally, before step S603, the network device further sends a third broadcast message, where the third broadcast message includes the second indication information, and the second indication information is used to indicate a maximum quantity of times that one terminal device sends the second information on the one or more first resources. Based on this, the terminal device can be prevented from frequently sending the second information on the first resource, and an error of the quantity of terminal devices estimated by the network device based on the second information can be reduced.

It should be noted that a second broadcast message is further defined in this application, and is described in subsequent embodiments. Details are not described herein again.

Optionally, the third broadcast message and the first broadcast message may be broadcast messages of a same type. In this case, the third broadcast message and the first broadcast message may be a same message or two messages of a same type. For example, both the third broadcast message and the first broadcast message are MIBs. The third broadcast message and the first broadcast message may be a same MIB sent by the network device, or may be two MIBs sent by the network device. Alternatively, the third broadcast message and the first broadcast message may be broadcast messages of different types. For example, the first broadcast message is a MIB, and the third broadcast message is a SIB 1.

In an implementation scenario of this application, as shown in FIG. 8, the method provided in this application may further include the following steps S605 to S606.

S605. The network device determines a state of the network device based on the quantity of terminal devices.

The state of the network device may also be understood as a state of the cell that belongs to the network device. The quantity of terminal devices is the quantity of terminal devices within the coverage of the network device.

Optionally, the state of the network device in this application may be one of the following three states:
a first state, where in the first state, the network device allows access of the terminal device, and a period in which the network device sends a common signal is a first period;
a second state, where in the second state, the network device allows access of the terminal device, a period in which the network device sends a common signal is a second period, and the second period is longer than the first period; or
a third state, where in the third state, the network device prohibits access of the terminal device.

Optionally, in the third state, the network device may not send the common signal, or may send the common signal. If the common signal is sent, a sending period of the common signal may be the first period, the second period, or another period. This is not specifically limited in this application.

Optionally, that the network device allows access of the terminal device may be understood as follows: The network device allows the terminal device to access the cell, or the cell of the network device allows the terminal device to access, or the cell of the network device allows the terminal device to camp on. Similarly, that the network device prohibits access of the terminal device may be understood as follows: The network device prohibits the terminal device to access the cell, or the cell of the network device prohibits the terminal device to access, or the cell of the network device prohibits the terminal device to camp on. Accessing or camping on a cell may be understood as that the terminal device completes a cell selection or cell reselection process and selects the cell, and the terminal device needs to monitor a broadcast message and a paging message in the cell.

Optionally, the common signal is a signal at a network device (or cell) level, and is valid for any terminal device in the network device (or cell). The common signal may be one or more of the following: an SSB, a PSS, an SSS, a MIB, a SIB 1, and a reference signal, for example, a cell-specific reference signal (cell-specific reference signal, CRS), or a narrowband reference signal (narrowband reference signal, NRS).

Optionally, the first period may be a common signal period defined in an existing standard (for example, the 3GPP Release 13 (Release 13, R13)), or may be a period shorter than the common signal period defined in the standard.

Optionally, when the network device determines the state of the network device, there are the following two implementations:
In a possible implementation, the network device first determines whether to allow access of the terminal device.

Optionally, when the terminal device is not allowed to access the network device, regardless of the quantity of terminal devices, the network device determines that the state of the network device is the third state.

Optionally, when the terminal device is allowed to perform access, the state of the network device is determined based on the quantity of terminal devices. If the quantity of terminal devices is greater than a first threshold, the state of the network device is determined as the first state. To be specific, when the quantity of terminal devices is large, the network device may send the common signal in the first period, to meet communication requirements of the large quantity of terminal devices. If the quantity of terminal devices is less than a first threshold, the state of the network device is determined as the second state. To be specific, when the quantity of terminal devices is small, the network device may send the common signal in the longer second period, to reduce power consumption of the network device.

Optionally, when the quantity of terminal devices is equal to the first threshold, the state of the network device may be the first state or the second state, and may be specifically determined by the network device based on an actual situation. This is not specifically limited in this application.

In another possible implementation, the network device first determines, based on the quantity of terminal devices, that the state of the network device is the first state or the second state, and then finally determines, based on whether the terminal device is allowed to perform access, that the state of the network device is the first state, the second state, or the third state.

Optionally, when the quantity of terminal devices is greater than the first threshold, the network device temporarily determines that the state of the network device is the first state. If the network device allows access of the terminal device, the network device finally determines that the state of the network device is the first state. If the network device does not allow access of the terminal device, the network device finally determines that the state of the network device is the third state.

Optionally, when the quantity of terminal devices is less than the first threshold, the network device temporarily determines that the state of the network device is the second state. If the network device allows access of the terminal device, the network device finally determines that the state of the network device is the second state. If the network device does not allow access of the terminal device, the network device finally determines that the state of the network device is the third state.

Certainly, the network device may determine the state of the network device in another implementation based on the quantity of terminal devices and whether the terminal device is allowed to perform access. This is not specifically limited in this application.

S606. The network device sends the second broadcast message. Correspondingly, the terminal device receives the second broadcast message from the network device.

The second broadcast message includes the first indication information, and the first indication information is used to indicate the state of the network device. It may be understood that the state of the network device is the state determined in step S605.

Optionally, after receiving the second broadcast message, the terminal device may determine the state of the network device based on the first indication information included in the second broadcast message, to perform subsequent processing based on the state of the network device, for example, determine a period for receiving the common signal, or determine whether to access the network device.

Optionally, when the state of the network device is the third state, that is, the network device prohibits access of the terminal device, the network device may further send access-prohibited duration in the second broadcast message. Alternatively, the access-prohibited duration may be sent in another broadcast message. This is not specifically limited in this application.

Optionally, when the first indication information indicates that the state of the network device is the third state, the terminal device does not attempt to access the network device (or cell) within a period of time after receiving the first indication information. Duration of the period of time may be configured by the network device in the second broadcast message or the another broadcast message, or may be defined in a protocol. This is not specifically limited in this application. After the period of time, the terminal device may continue to determine, based on the state, of the network device, indicated by the network device, whether to perform access.

Based on the foregoing solution, after receiving the second information, the network device determines the quantity of terminal devices based on the second information. Further, the state of the network device may be determined based on the quantity of terminal devices. When there is a large quantity of terminal devices, the network device may send the common signal in the first period, to meet communication requirements of the large quantity of terminal devices. When there is a small quantity of terminal devices, the network device may send the common signal in the longer second period, to reduce power consumption of the network device.

Optionally, because the second information is used by the network device to determine the quantity of terminal devices, after receiving the second information, the network device may not send response information of the second information. Correspondingly, after sending the second information, the terminal device does not monitor the response information of the second information, or enters an idle state. The idle state is, for example, an RRC idle state. Based on this solution, signaling overheads and power consumption of the network device and the terminal device can be reduced.

Optionally, it is assumed that the test period shown in FIG. 5 exists.

In this case, the network device determines, in the test phase in the current test period, that the state of the network device is the first state, the state of the network device in the non-test phase in the current test period remains the first state. After the current test period ends, the network device may not enter a next test period, but remains the first state, that is, the current test period is used as the last test period.

After the network device determines, in the test phase of the current test period, that the state of the network device is the second state, the state of the network device remains the second state in the non-test phase in the current test period. The network device may continue to perform the method shown in FIG. 6 or FIG. 8 in a test phase of the next test period to determine the quantity of terminal devices, and finally determine the state of the network device based on the quantity of terminal devices. Alternatively, the network may use a part of the non-test phase in the current test period as a test phase, and continue to perform the method shown in FIG. 6 or FIG. 8 to determine the quantity of terminal devices, and finally determine the state of the network device based on the quantity of terminal devices.

In a period of time after the network device determines, in the test phase in the current test period, that the state of the network device is the third state, the state of the network device may remain the third state. After the period of time, the network device may re-determine the state of the network device, and notify the terminal device of the state.

Optionally, it is assumed that the test phase exists, and the test period and the non-test phase do not exist.

In this case, after the network device determines, in the test phase, that the state of the network device is the first state, the test phase ends, and the state of the network device may remain the first state subsequently. Time after the test phase ends is not defined in this application.

After the network device determines, in the test phase, that the state of the network device is the second state, the test phase is prolonged. The network device continues to perform the method shown in FIG. 6 or FIG. 8 to determine the quantity of terminal devices, and finally determines the state of the network device based on the quantity of terminal devices.

In a period of time after the network device determines, in the test phase, that the state of the network device is the third state, the state of the network device may remain the third state. After the period of time, the network device may re-determine the state of the network device, and notify the terminal device of the state.

In addition, this application further provides a method for a network device to determine a quantity of terminal devices. In the method, the network device may configure a RACH resource for the terminal device. When the terminal device has a service that arrives and needs to send uplink data, the terminal device sends a preamble sequence on the RACH resource. In this way, the network device may determine the quantity of terminal devices based on the preamble sequences received on the RACH resource, and then determine the state of the network device based on the quantity of terminal devices. For details, refer to the descriptions in step S605. Details are not described herein again.

Based on this solution, after receiving the preamble sequence, the network device may determine the quantity of terminal devices based on the preamble sequence. Further, the state of the network device may be determined based on the quantity of terminal devices. When there is a large quantity of terminal devices, the network device may send the common signal in the first period, to meet communication requirements of the large quantity of terminal devices. When there is a small quantity of terminal devices, the network device may send the common signal in the longer second period, to reduce power consumption of the network device.

In the embodiments shown in FIG. 6 or FIG. 8, actions of the network device may be performed by the processor 301 in the network device 30 shown in FIG. 3 by invoking the application program code stored in the memory 302, to instruct the network device for performing. In the embodiments shown in FIG. 6 or FIG. 8, the actions of the terminal device may be performed by the processor 401 in the terminal device 40 shown in FIG. 3 by invoking the application program code stored in the memory 402, to instruct the terminal device for performing. This is not limited in this embodiment.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments, methods and/or steps implemented by the terminal device may also be implemented by a component (for example, a chip or a circuit) that can be used in the terminal device, and methods and/or steps implemented by the network device may also be implemented by a component that can be used in the network device.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the terminal device in the foregoing method embodiments, an apparatus including the foregoing terminal device, or a component that can be used in the terminal device; or the communication apparatus may be the network device in the foregoing method embodiments, an apparatus including the foregoing network device, or a component that can be used in the network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

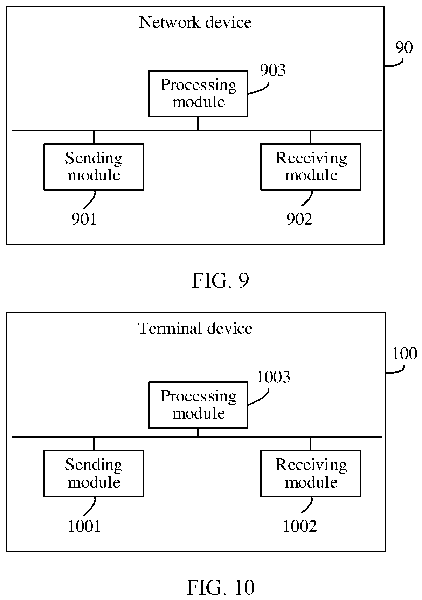

For example, the communication apparatus is the network device in the foregoing method embodiments. FIG. 9 is a schematic diagram of a structure of a network device 90. The network device 90 includes a sending module 901, a receiving module 902, and a processing module 903.

Optionally, the network device 90 may further include a storage module (not shown in FIG. 9), configured to store computer program instructions and/or data.

Optionally, the sending module 901 and the receiving module 902 are respectively configured to perform sending and receiving steps performed by the network device in the foregoing method embodiments. The processing module 903 may be configured to perform processing (for example, determining, obtaining, and generating) steps performed by the network device in the foregoing method embodiments.

Optionally, the sending module 901 and the receiving module 902 may be collectively referred to as a transceiver module. The sending module 901 may be a sending circuit, a transmitter machine, a transmitter, or a communication interface, and may also be referred to as a sending unit. The receiving module 902 may be a receiving circuit, a receiver machine, a receiver, or a communication interface, and may also be referred to as a receiving unit.

The processing module 903 is configured to determine first information, where the first information is used to indicate a terminal device to send second information on one or more first resources. The sending module 901 is configured to send a first message, where the first message includes the first information, and the first message is a first broadcast message or a paging message. The receiving module 902 is configured to receive second information on the one or more first resources.

Optionally, the sending module 901 is further configured to send a second broadcast message, where the second broadcast message includes first indication information, the first indication information is used to indicate a state of the network device, and the state of the network device includes a first state, a second state, or a third state.

In the first state, the network device allows access of the terminal device, and a period in which the network device sends a common signal is a first period.

In the second state, the network device allows access of the terminal device, a period in which the network device sends a common signal is a second period, and the second period is longer than the first period.

In the third state, the network device prohibits access of the terminal device.

Optionally, the sending module 901 is further configured to send a third broadcast message, where the third broadcast message includes second indication information, and the second indication information is used to indicate a maximum quantity of times that one terminal device sends second information on the one or more first resources.

All related content of the steps in the foregoing method embodiments may be cited in function descriptions of the corresponding functional modules. Details are not described herein again.

In this embodiment, the network device 90 is presented in a form of functional modules obtained through division performed in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the network device 90 may be in a form of the network device 30 shown in FIG. 3.

For example, the processor 301 in the network device 30 shown in FIG. 3 may invoke computer-executable instructions stored in the memory 302, to enable the network device 30 to perform the information sending method in the foregoing method embodiments.

Specifically, a function/an implementation process of the processing module 903 in FIG. 9 may be implemented by the processor 301 in the network device 30 shown in FIG. 3 by invoking the computer-executable instruction stored in the memory 302, and a function/an implementation process of the sending module 901 or the receiving module 902 in FIG. 9 may be implemented by the transceiver 303 in the network device 30 shown in FIG. 3.

The network device 90 provided in this embodiment may perform the foregoing information sending method. Therefore, for technical effects that can be achieved by the network device 90, refer to the foregoing method embodiments. Details are not described herein again.

Alternatively, for example, the communication apparatus is the terminal device in the foregoing method embodiments. FIG. 10 is a schematic diagram of a structure of a terminal device 100. The terminal device 100 includes a sending module 1001, a receiving module 1002, and a processing module 1003.

Optionally, the terminal device 100 may further include a storage module (not shown in FIG. 10), configured to store computer program instructions and/or data.

Optionally, the sending module 1001 and the receiving module 1002 are respectively configured to perform sending and receiving steps performed by the terminal device in the foregoing method embodiments. The processing module 1003 may be configured to perform processing (for example, determining, obtaining, and generating) steps performed by the terminal device in the foregoing method embodiments.

Optionally, the sending module 1001 and the receiving module 1002 may be collectively referred to as a transceiver module. The sending module 1001 may be a sending circuit, a transmitter machine, a transmitter, or a communication interface, and may also be referred to as a sending unit. The receiving module 1002 may be a receiving circuit, a receiver machine, a receiver, or a communication interface, and may also be referred to as a receiving unit.

The receiving module 1002 is configured to receive a first message from a network device, where the first message includes first information, the first information is used to indicate a terminal device to send second information on one or more first resources, and the first message is a first broadcast message or a paging message. The processing module 1003 is configured to determine the second information after the receiving module 1002 receives the first information. The sending module 1001 is configured to send the second information on a part of or all of the one or more first resources.

Optionally, the receiving module 1002 may be further configured to receive a second broadcast message from the network device, where the second broadcast message includes first indication information, and the first indication information is used to indicate a state of the network device; and the processing module 1003 is configured to determine the state of the network device based on the first indication information. The state of the network device includes a first state, a second state, or a third state.

In the first state, the network device allows access of the terminal device, and a period in which the network device sends a common signal is a first period.

In the second state, the network device allows access of the terminal device, a period in which the network device sends a common signal is a second period, and the second period is longer than the first period.

In the third state, the network device prohibits access of the terminal device.

Optionally, the receiving module 1002 is further configured to receive a third broadcast message from the network device, where the third broadcast message includes second indication information, and the second indication information is used to indicate a maximum quantity of times that one terminal device sends the second information on the one or more first resources; and the sending module 1001 is specifically configured to send the second information on the part of or all of the one or more first resources based on the maximum quantity of times.

Optionally, the first information includes resource configuration information, and the resource configuration information is used to configure one or more first resources; and the resource configuration information includes a time domain offset and/or a frequency domain offset, the time domain offset is an offset of a time domain position of the first resource relative to a time domain position of the first message, and the frequency domain offset is an offset of a frequency domain position of the first resource relative to a frequency domain position of the first message. The processing module 1003 is further configured to determine the one or more first resources based on the first information.

Optionally, after the sending module 1001 sends the second information, the processing module 1003 is further configured to determine not to monitor response information of the second information; or the processing module 1003 is further configured to control the terminal device to enter an idle state.

All related content of the steps in the foregoing method embodiments may be cited in function descriptions of the corresponding functional modules. Details are not described herein again.

In this embodiment, the terminal device 100 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the terminal device 100 may be in a form of the terminal device 40 shown in FIG. 3.

For example, the processor 401 in the terminal device 40 shown in FIG. 3 may invoke computer-executable instructions stored in the memory 402, to enable the terminal device 40 to perform the information sending method in the foregoing method embodiments.

Specifically, a function/an implementation process of the processing module 1003 in FIG. 9 may be implemented by the processor 401 in the terminal device 40 shown in FIG. 3 by invoking the computer-executable instruction stored in the memory 402, and a function/an implementation process of the sending module 1001 or the receiving module 1002 in FIG. 9 may be implemented by the transceiver 403 in the terminal device 40 shown in FIG. 3.

The terminal device 100 provided in this embodiment may perform the foregoing information sending method. Therefore, for technical effects that can be achieved by the terminal device 100, refer to the foregoing method embodiments. Details are not described herein again.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to instruct the communication apparatus to perform the method in any one of the foregoing method embodiments. Certainly, the communication apparatus may not include a memory. In another possible design, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component) and transmit the computer-executable instructions to the processor. When being the chip system, the communication apparatus may include a chip, or may include a chip and another discrete component. This is not specifically limited in this embodiment of this application.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the apparatus described above.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example descriptions of this application defined by the appended claims, and are considered as any of or all modifications, variations, combinations that cover the scope of this application. It is clearly that a person skilled in the art can make various modifications and variations to this application without departing from the scope of this application. This application is intended to cover these modifications and variations of this application provided that they fall within the scope of protection defined by the following claims.

## Claims

1. An information sending method, wherein the method comprises:
sending (S602), by a network device, a first message, wherein the first message comprises first information, the first information is used to indicate a terminal device to send second information on one or more first resources, and the first message is a first broadcast message or a paging message;
receiving (S603), by the network device, the second information on the one or more first resources; and
determining (S604), by the network device, a quantity of terminal devices within coverage of the network device based on the second information.

2. The method according to claim 1, wherein the method further comprises:
sending (S606), by the network device, a second broadcast message, wherein the second broadcast message comprises first indication information, the first indication information is used to indicate a state of the network device, and the state of the network device comprises a first state, a second state, or a third state; and
in the first state, the network device allows access of the terminal device, and a period in which the network device sends a common signal is a first period;
in the second state, the network device allows access of the terminal device, a period in which the network device sends a common signal is a second period, and the second period is longer than the first period; or
in the third state, the network device prohibits access of the terminal device.

3. The method according to claim 2, wherein the state of the network device is determined based on the quantity of terminal devices.

4. The method according to claim 3, wherein when the quantity of terminal devices is greater than or equal to a first threshold, the state of the network device is the first state or the third state; or
when the quantity of terminal devices is less than a first threshold, the state of the network device is the second state or the third state.

5. The method according to any one of claims 1 to 4, wherein the method further comprises:
sending, by the network device, a third broadcast message, wherein the third broadcast message comprises second indication information, and the second indication information is used to indicate a maximum quantity of times that one terminal device sends the second information on the one or more first resources.

6. The method according to any one of claims 1 to 5, wherein the first information comprises resource configuration information, and the resource configuration information is used to configure the one or more first resources; and
the resource configuration information comprises a time domain offset value and/or a frequency domain offset value, the time domain offset value is an offset value of a time domain position of the first resource relative to a time domain position of the first message, and the frequency domain offset value is an offset value of a frequency domain position of the first resource relative to a frequency domain position of the first message.

7. An information sending method, wherein the method comprises:
receiving (S602), by a communication apparatus, a first message from a network device, wherein the first message comprises first information, the first information is used to indicate the communication apparatus to send second information on one or more first resources, and the first message is a first broadcast message or a paging message; and
sending (S603), by the communication apparatus, the second information on a part of or all of the one or more first resources,
wherein a quantity of communication apparatus within coverage of the network device is determined based on the second information.

8. The method according to claim 7, wherein the method further comprises:
receiving (S606), by the communication apparatus, a second broadcast message from the network device, wherein the second broadcast message comprises first indication information, and the first indication information is used to indicate a state of the network device; and
determining, by the communication apparatus, the state of the network device based on the first indication information, wherein
the state of the network device comprises a first state, a second state, or a third state; and
in the first state, the network device allows access of the communication apparatus, and a period in which the network device sends a common signal is a first period;
in the second state, the network device allows access of the communication apparatus, a period in which the network device sends a common signal is a second period, and the second period is longer than the first period; or
in the third state, the network device prohibits access of the communication apparatus.

9. The method according to claim 8, wherein the state of the network device is determined based on the quantity of communication apparatus.

10. The method according to claim 9, wherein when the quantity of communication apparatus is greater than or equal to a first threshold, the state of the network device is the first state or the third state; or
when the quantity of communication apparatus is less than a first threshold, the state of the network device is the second state or the third state.

11. The method according to any one of claims 7 to 10, wherein the method further comprises:
receiving, by the communication apparatus, a third broadcast message from the network device, wherein the third broadcast message comprises second indication information, and the second indication information is used to indicate a maximum quantity of times that one communication apparatus sends the second information on the one or more first resources; and
the sending, by the communication apparatus, the second information on a part of or all of the one or more first resources comprises:
sending, by the communication apparatus, the second information on the part of or all of the one or more first resources based on the maximum quantity of times.

12. The method according to any one of claims 7 to 11, wherein the first information comprises resource configuration information, and the resource configuration information is used to configure the one or more first resources; and the resource configuration information comprises a time domain offset value and/or a frequency domain offset value, the time domain offset value is an offset value of a time domain position of the first resource relative to a time domain position of the first message, and the frequency domain offset value is an offset value of a frequency domain position of the first resource relative to a frequency domain position of the first message; and
the method further comprises:
determining, by the communication apparatus, the one or more first resources based on the first information.

13. The method according to any one of claims 7 to 12, wherein the second information is a preamble sequence in a random access procedure.

14. The method according to any one of claims 7 to 13, wherein after the sending, by the communication apparatus, the second information, the method further comprises:
skipping, by the communication apparatus, monitoring response information of the second information; or entering, by the communication apparatus, an idle state.

15. A communication apparatus, wherein the communication apparatus comprises a processor, wherein
the processor is configured to execute a computer program or instructions stored in a memory, so that the communication apparatus performs the method according to any one of claims 1 to 6, or so that the communication apparatus performs the method according to any one of claims 7 to 14.

## Patentansprüche

1. Informationssendeverfahren, wobei das Verfahren Folgendes umfasst:
Senden (S602), durch ein Netzgerät, einer ersten Nachricht, wobei die erste Nachricht erste Informationen umfasst, die ersten Informationen dazu verwendet werden, einem Endgerät anzuzeigen, zweite Informationen über eine oder mehrere erste Ressourcen zu senden, und die erste Nachricht eine erste Rundfunknachricht oder eine Funkrufnachricht ist;
Empfangen (S603), durch das Netzgerät, der zweiten Informationen über die eine oder die mehreren ersten Ressourcen; und
Bestimmen (S604), durch das Netzgerät, einer Anzahl von Endgeräten innerhalb einer Reichweite des Netzgeräts basierend auf den zweiten Informationen.

2. Verfahren nach Anspruch 1, wobei das Verfahren ferner Folgendes umfasst:
Senden (S606), durch das Netzgerät, einer zweiten Rundfunknachricht, wobei die zweite Rundfunknachricht erste Anzeigeinformationen umfasst, die ersten Anzeigeinformationen dazu verwendet werden, einen Zustand des Netzgeräts anzuzeigen, und der Zustand des Netzgeräts einen ersten Zustand, einen zweiten Zustand oder einen dritten Zustand umfasst; und
in dem ersten Zustand das Netzgerät Zugriff zu dem Endgerät erteilt und ein Zeitraum, in dem das Netzgerät ein gemeinsames Signal sendet, ein erster Zeitraum ist;
in dem zweiten Zustand das Netzgerät Zugriff zu dem Endgerät erteilt, ein Zeitraum, in dem das Netzgerät ein gemeinsames Signal sendet, ein zweiter Zeitraum ist und der zweite Zeitraum länger als der erste Zeitraum ist; oder
in dem dritten Zustand das Netzgerät Zugriff zu dem Endgerät untersagt.

3. Verfahren nach Anspruch 2, wobei der Zustand des Netzgeräts basierend auf der Anzahl von Endgeräten bestimmt wird.

4. Verfahren nach Anspruch 3, wobei, wenn die Anzahl von Endgeräten größer oder gleich einem ersten Schwellenwert ist, der Zustand des Netzgeräts der erste Zustand oder der dritte Zustand ist; oder
wenn die Anzahl von Endgeräten kleiner als ein erster Schwellenwert ist, der Zustand des Netzgeräts der zweite Zustand oder der dritte Zustand ist.

5. Verfahren nach einem der Ansprüche 1 bis 4, wobei das Verfahren ferner Folgendes umfasst:
Senden, durch das Netzgerät, einer dritten Rundfunknachricht, wobei die dritte Rundfunknachricht zweite Anzeigeinformationen umfasst und die zweiten Anzeigeinformationen dazu verwendet werden, eine maximale Anzahl von Malen anzuzeigen, die ein Endgerät die zweiten Informationen über die eine oder die mehreren ersten Ressourcen sendet.

6. Verfahren nach einem der Ansprüche 1 bis 5, wobei die ersten Informationen Ressourcenkonfigurationsinformationen umfassen und die Ressourcenkonfigurationsinformationen dazu verwendet werden, die einen oder die mehreren ersten Ressourcen zu konfigurieren; und
die Ressourcenkonfigurationsinformationen einen Zeitdomänenversatzwert und/oder einen Frequenzdomänenversatzwert umfassen, der Zeitdomänenversatzwert ein Versatzwert einer Zeitdomänenposition der ersten Ressource in Bezug auf eine Zeitdomänenposition der ersten Nachricht ist und der Frequenzdomänenversatzwert ein Versatzwert einer Frequenzdomänenposition der ersten Ressource in Bezug auf eine Frequenzdomänenposition der ersten Nachricht ist.

7. Informationssendeverfahren, wobei das Verfahren Folgendes umfasst:
Empfangen (S602), durch eine Kommunikationsvorrichtung, einer ersten Nachricht von einem Netzgerät, wobei die erste Nachricht erste Informationen umfasst, die ersten Informationen dazu verwendet werden, der Kommunikationsvorrichtung anzuzeigen,
zweite Informationen über eine oder mehrere erste Ressourcen zu senden, und die erste Nachricht eine erste Rundfunknachricht oder eine Funkrufnachricht ist; und
Senden (S603), durch die Kommunikationsvorrichtung, der zweiten Informationen über einen Teil oder alle der einen oder der mehreren ersten Ressourcen,
wobei eine Anzahl von Kommunikationsvorrichtungen innerhalb einer Reichweite des Netzgeräts basierend auf den zweiten Informationen bestimmt wird.

8. Verfahren nach Anspruch 7, wobei das Verfahren ferner Folgendes umfasst:
Empfangen (S606), durch die Kommunikationsvorrichtung, einer zweiten Rundfunknachricht von dem Netzgerät, wobei die zweite Rundfunknachricht erste Anzeigeinformationen umfasst und die ersten Anzeigeinformationen dazu verwendet werden, einen Zustand des Netzgeräts anzuzeigen; und
Bestimmen, durch die Kommunikationsvorrichtung, des Zustands des Netzgeräts basierend auf den ersten Anzeigeinformationen, wobei der Zustand des Netzgeräts einen ersten Zustand, einen zweiten Zustand oder einen dritten Zustand umfasst; und
in dem ersten Zustand das Netzgerät Zugriff zu der Kommunikationsvorrichtung erteilt und ein Zeitraum, in dem das Netzgerät ein gemeinsames Signal sendet, ein erster Zeitraum ist;
in dem zweiten Zustand das Netzgerät Zugriff zu der Kommunikationsvorrichtung erteilt, ein Zeitraum, in dem das Netzgerät ein gemeinsames Signal sendet, ein zweiter Zeitraum ist und der zweite Zeitraum länger als der erste Zeitraum ist; oder
in dem dritten Zustand das Netzgerät Zugriff zu der Kommunikationsvorrichtung untersagt.

9. Verfahren nach Anspruch 8, wobei der Zustand des Netzgeräts basierend auf der Anzahl von Kommunikationsvorrichtungen bestimmt wird.

10. Verfahren nach Anspruch 9, wobei, wenn die Anzahl von Kommunikationsvorrichtungen größer oder gleich einem ersten Schwellenwert ist, der Zustand des Netzgeräts der erste Zustand oder der dritte Zustand ist; oder
wenn die Anzahl von Kommunikationsvorrichtungen kleiner als ein erster Schwellenwert ist, der Zustand des Netzgeräts der zweite Zustand oder der dritte Zustand ist.

11. Verfahren nach einem der Ansprüche 7 bis 10, wobei das Verfahren ferner Folgendes umfasst:
Empfangen, durch die Kommunikationsvorrichtung, einer dritten Rundfunknachricht von dem Netzgerät, wobei die dritte Rundfunknachricht zweite Anzeigeinformationen umfasst und die zweiten Anzeigeinformationen dazu verwendet werden, eine maximale Anzahl von Malen anzuzeigen, die eine Kommunikationsvorrichtung die zweiten Informationen über die eine oder die mehreren ersten Ressourcen sendet; und
das Senden, durch die Kommunikationsvorrichtung, der zweiten Informationen über einen Teil oder alle der einen oder der mehreren ersten Ressourcen Folgendes umfasst:
Senden, durch die Kommunikationsvorrichtung, der zweiten Informationen über den Teil oder alle der einen oder der mehreren ersten Ressourcen basierend auf der maximalen Anzahl von Malen.

12. Verfahren nach einem der Ansprüche 7 bis 11, wobei die ersten Informationen Ressourcenkonfigurationsinformationen umfassen und die Ressourcenkonfigurationsinformationen dazu verwendet werden, die eine oder die mehreren ersten Ressourcen zu konfigurieren; und die Ressourcenkonfigurationsinformationen einen Zeitdomänenversatzwert und/oder einen Frequenzdomänenversatzwert umfassen, der Zeitdomänenversatzwert ein Versatzwert einer Zeitdomänenposition der ersten Ressource in Bezug auf eine Zeitdomänenposition der ersten Nachricht ist und der Frequenzdomänenversatzwert ein Versatzwert einer Frequenzdomänenposition der ersten Ressource in Bezug auf eine Frequenzdomänenposition der ersten Nachricht ist; und
das Verfahren ferner Folgendes umfasst:
Bestimmen, durch die Kommunikationsvorrichtung, der einen oder der mehreren ersten Ressourcen basierend auf den ersten Informationen.

13. Verfahren nach einem der Ansprüche 7 bis 12, wobei die zweiten Informationen eine Präambelsequenz in einer Direktzugriffsprozedur sind.

14. Verfahren nach einem der Ansprüche 7 bis 13, wobei das Verfahren nach dem Senden, durch die Kommunikationsvorrichtung, der zweiten Informationen ferner Folgendes umfasst:
Überspringen, durch die Kommunikationsvorrichtung, von Überwachungsreaktionsinformationen der zweiten Informationen;
oder Eintreten, durch die Kommunikationsvorrichtung, in einen Leerlaufzustand.

15. Kommunikationsvorrichtung, wobei die Kommunikationsvorrichtung einen Prozessor umfasst, wobei der Prozessor dazu konfiguriert ist, ein Computerprogramm oder Anweisungen, die in einem Speicher gespeichert sind, auszuführen, sodass die Kommunikationsvorrichtung das Verfahren nach einem der Ansprüche 1 bis 6 durchführt oder sodass die Kommunikationsvorrichtung das Verfahren nach einem der Ansprüche 7 bis 14 durchführt.

## Revendications

1. Procédé d'envoi d'informations, dans lequel le procédé comprend :
l'envoi (S602), par un dispositif réseau, d'un premier message, dans lequel le premier message comprend des premières informations, les premières informations sont utilisées pour indiquer à un dispositif terminal d'envoyer des secondes informations sur une ou plusieurs premières ressources, et le premier message est un premier message diffusé ou message de radiomessagerie ;
la réception (S603), par le dispositif réseau, des secondes informations sur les une ou plusieurs premières ressources ; et
la détermination (S604), par le dispositif réseau, d'une quantité de dispositifs terminaux dans la couverture du dispositif réseau sur la base des secondes informations.

2. Procédé selon la revendication 1, dans lequel le procédé comprend également :
l'envoi (S606), par le dispositif réseau, d'un deuxième message diffusé, dans lequel le deuxième message diffusé comprend des premières informations d'indication, les premières informations d'indication sont utilisées pour indiquer un état du dispositif réseau, et l'état du dispositif réseau comprend un premier état, un deuxième état ou un troisième état ; et
dans le premier état, le dispositif réseau autorise l'accès au dispositif terminal, et une période pendant laquelle le dispositif réseau envoie un signal commun est une première période ;
dans le deuxième état, le dispositif réseau autorise l'accès au dispositif terminal, une période pendant laquelle le dispositif réseau envoie un signal commun est une seconde période, et la seconde période est plus longue que la première période ; ou dans le troisième état, le dispositif réseau interdit l'accès au dispositif terminal.

3. Procédé selon la revendication 2, dans lequel l'état du dispositif réseau est déterminé sur la base de la quantité de dispositifs terminaux.

4. Procédé selon la revendication 3, dans lequel lorsque la quantité de dispositifs terminaux est supérieure ou égale à un premier seuil, l'état du dispositif réseau est le premier état ou le troisième état ; ou
lorsque la quantité de dispositifs terminaux est inférieure à un premier seuil, l'état du dispositif réseau est le deuxième état ou le troisième état.

5. Procédé selon l'une quelconque des revendications 1 à 4, dans lequel le procédé comprend également :
l'envoi, par le dispositif réseau, d'un troisième message diffusé, dans lequel le troisième message diffusé comprend des secondes informations d'indication, et les secondes informations d'indication sont utilisées pour indiquer une quantité maximale de fois où un dispositif terminal envoie les secondes informations sur les une ou plusieurs premières ressources.

6. Procédé selon l'une quelconque des revendications 1 à 5, dans lequel les premières informations comprennent des informations de configuration de ressources, et les informations de configuration de ressources sont utilisées pour configurer les une ou plusieurs premières ressources ; et
les informations de configuration de ressources comprennent une valeur de décalage dans le domaine temporel et/ou une valeur de décalage dans le domaine fréquentiel, la valeur de décalage dans le domaine temporel est une valeur de décalage d'une position dans le domaine temporel de la première ressource par rapport à une position dans le domaine temporel du premier message, et la valeur de décalage dans le domaine fréquentiel est une valeur de décalage d'une position dans le domaine fréquentiel de la première ressource par rapport à une position dans le domaine fréquentiel du premier message.

7. Procédé d'envoi d'informations, dans lequel le procédé comprend :
la réception (S602), par un appareil de communication, d'un premier message provenant d'un dispositif réseau, dans lequel le premier message comprend des premières informations, les premières informations sont utilisées pour indiquer à l'appareil de communication d'envoyer des secondes informations sur une ou plusieurs premières ressources, et le premier message est un premier message diffusé ou un message de radiomessagerie ; et
l'envoi (S603), par l'appareil de communication, des secondes informations sur une partie ou la totalité des une ou plusieurs premières ressources,
dans lequel une quantité d'appareils de communication dans la couverture du dispositif réseau est déterminée sur la base des secondes informations.

8. Procédé selon la revendication 7, dans lequel le procédé comprend également :
la réception (S606), par l'appareil de communication, d'un deuxième message diffusé en provenance du dispositif réseau, dans lequel le deuxième message diffusé comprend des premières informations d'indication, et les premières informations d'indication sont utilisées pour indiquer un état du dispositif réseau ; et
la détermination, par l'appareil de communication, de l'état du dispositif réseau sur la base des premières informations d'indication, dans lequel
l'état du dispositif réseau comprend un premier état, un deuxième état ou un troisième état ; et
dans le premier état, le dispositif réseau autorise l'accès à l'appareil de communication, et une période pendant laquelle le dispositif réseau envoie un signal commun est une première période ;
dans le deuxième état, le dispositif réseau autorise l'accès à l'appareil de communication, une période pendant laquelle le dispositif réseau envoie un signal commun est une seconde période, et la seconde période est plus longue que la première période ; ou
dans le troisième état, le dispositif réseau interdit l'accès à l'appareil de communication.

9. Procédé selon la revendication 8, dans lequel l'état du dispositif réseau est déterminé sur la base de la quantité d'appareils de communication.

10. Procédé selon la revendication 9, dans lequel lorsque la quantité d'appareils de communication est supérieure ou égale à un premier seuil, l'état du dispositif réseau est le premier état ou le troisième état ; ou
lorsque la quantité d'appareils de communication est inférieure à un premier seuil, l'état du dispositif réseau est le deuxième état ou le troisième état.

11. Procédé selon l'une quelconque des revendications 7 à 10, dans lequel le procédé comprend également :
la réception, par l'appareil de communication, d'un troisième message diffusé en provenance du dispositif réseau, dans lequel le troisième message diffusé comprend des secondes informations d'indication, et les secondes informations d'indication sont utilisées pour indiquer une quantité maximale de fois où un appareil de communication envoie les secondes informations sur les une ou plusieurs premières ressources ; et
l'envoi, par l'appareil de communication, des secondes informations sur une partie ou la totalité des une ou plusieurs premières ressources comprend :
l'envoi, par l'appareil de communication, des secondes informations sur une partie ou la totalité des une ou plusieurs premières ressources sur la base de la quantité maximale de fois.

12. Procédé selon l'une quelconque des revendications 7 à 11, dans lequel les premières informations comprennent des informations de configuration de ressources, et les informations de configuration de ressources sont utilisées pour configurer les une ou plusieurs premières ressources ; et les informations de configuration de ressources comprennent une valeur de décalage dans le domaine temporel et/ou une valeur de décalage dans le domaine fréquentiel, la valeur de décalage dans le domaine temporel est une valeur de décalage d'une position dans le domaine temporel de la première ressource par rapport à une position dans le domaine temporel du premier message, et la valeur de décalage dans le domaine fréquentiel est une valeur de décalage d'une position dans le domaine fréquentiel de la première ressource par rapport à une position dans le domaine fréquentiel du premier message ; et
le procédé comprend également :
la détermination, par l'appareil de communication, des une ou plusieurs premières ressources sur la base des premières informations.

13. Procédé selon l'une quelconque des revendications 7 à 12, dans lequel les secondes informations sont une séquence de préambule dans une procédure d'accès aléatoire.

14. Procédé selon l'une quelconque des revendications 7 à 13, dans lequel, après l'envoi, par l'appareil de communication, des secondes informations, le procédé comprend également :
le saut, par l'appareil de communication, de la surveillance des informations de réponse des secondes informations ; ou l'entrée, par l'appareil de communication, dans un état inactif.

15. Appareil de communication, dans lequel l'appareil de communication comprend un processeur, dans lequel le processeur est configuré pour exécuter un programme informatique ou des instructions stockées dans une mémoire, de sorte que l'appareil de communication réalise le procédé selon l'une quelconque des revendications 1 à 6, ou de sorte que l'appareil de communication réalise le procédé selon l'une quelconque des revendications 7 à 14.
